# EUROPEAN PATENT APPLICATION

(11) **EP 3 089 020 A1**
(43) Date of publication of application: **02.11.2016**
(21) Application number: 16167669.7
(22) Date of filing: 29.04.2016
(51) Int. Cl.: G06F 3/0488, G06F 3/0482, G06F 21/36, H04M 1/67, G06F 3/0481

(54) **ELECTRONIC DEVICE FOR PROVIDING SHORT-CUT USER INTERFACE AND METHOD THEREFOR**

(30) Priority: 29.04.2015 KR 20150060258
(71) Applicant: Samsung Electronics Co., Ltd, Gyeonggi-do 16677 (KR)
(72) Inventor: KIM, Hye Won, 06990 Seoul (KR); OH, Mi A, 13555 Gyeonggi-do (KR)
(74) Representative: Gover, Richard Paul

(57) **Abstract**

An electronic device is provided. The electronic device includes a display configured to display an unlock user interface(UI), a touch circuit, a memory configured to store an unlock solution, and a processor electrically connected to the touch circuit, the display, and the memory. The processor controls the display to display, in response to a touch input received from the touch circuit for inputting an unlock solution on the unlock UI, a short-cut UI on the unlock UI according to a position where the input unlock solution is ended.

## Description

### PRIORITY

This application claims priority to a Korean patent application filed on April 29, 2015 in the Korean Intellectual Property Office and assigned Serial number 10-2015-0060258, the entire contents of which are incorporated herein by reference.

### BACKGROUND OF THE INVENTION

### 1. Field of the Invention

The present disclosure relates generally to electronic devices, and more particularly, to electronic devices and methods thereof for providing short-cut user interfaces (UIs).

### 2. Background of the Invention

With the development of information and communication technologies, network devices, such as base stations, have been installed throughout the country and abroad. Electronic devices communicate data with other electronic devices over networks, such that users may freely use networks throughout the country and abroad.

Various types of electronic devices provide a variety of functions due to recent trends in digital convergence. For example, in addition to supporting a call function, a smartphone may also support an internet access function using a network, a music or video playback function, and a photo or video capturing function using an image sensor.

Electronic devices that perform the above-mentioned functions store a large amount of personal information of users. Therefore, in order to protect personal information of the users, the electronic devices provide lock functions to prevent unauthorized users from accessing the electronic devices. However, if using the lock functions, conventional electronic devices usually require complex or inconvenient procedure for user to execute an application on the electronic devices.

### SUMMARY OF THE INVENTION

The present disclosure has been made to address the above-mentioned problems and disadvantages, and to provide at least the advantages described below.

Accordingly, an aspect of the present disclosure is to provide an electronic device for receiving an unlock pattern, releases a lock state, and displaying a short-cut UI and a method therefor.

In accordance with an aspect of the present disclosure, an electronic device is provided. The electronic device includes a display configured to display an unlock user interface(UI), a touch circuit, a memory configured to store an unlock solution, and a processor electrically connected to the touch circuit, the display, and the memory. The processor controls the display to display, in response to a touch input received from the touch circuit for inputting an unlock solution on the unlock UI, a short-cut UI on the unlock UI according to a position where the input unlock solution is ended.

In accordance with another aspect of the present disclosure, a method performed in an electronic device is provided. The method includes displaying an unlock user interface (UI), receiving a touch input for inputting an unlock solution on the unlock UI, and displaying, in response to the received touch input, a short-cut UI according to a position where the input unlock resolution is ended.

In accordance with another aspect of the present disclosure, a non-transitory computer-readable recording medium storing embodied thereon instructions, when executed by at least one processor, the instructions set to perform a method in an electronic device is provided. The method includes displaying an unlock user interface (UI), receiving a touch input for inputting an unlock solution on the unlock UI, and displaying, in response to the received touch input, a short-cut UI according to a position where the input unlock resolution is ended.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram illustrating a configuration of an electronic device in a network environment according to an embodiment of the present disclosure;
FIG. 2 is a block diagram illustrating a configuration of an electronic device according to an embodiment of the present disclosure;
FIG. 3 is a block diagram illustrating a configuration of a program module according to an embodiment of the present disclosure;
FIG. 4 is a block diagram illustrating a configuration of an electronic device according to an embodiment of the present disclosure;
FIG. 5 is a diagram illustrating an operation of providing a short-cut user interface (UI) in an electronic device based on an unlock pattern input from a user, according to an embodiment of the present disclosure;
FIG. 6 is a diagram illustrating an unlock UI, if an unlock pattern input from a user is different from an unlock pattern stored in a memory, according to an embodiment of the present disclosure;
FIG. 7A is a diagram illustrating an operation of providing an application screen corresponding to a selected icon, if one of a plurality of icons included in a short-cut UI provided by an electronic device is selected, according to an embodiment of the present disclosure;
FIG. 7B is a diagram illustrating an operation of providing a home screen, if one of icons included in a short-cut UI provided by an electronic device is not selected, according to an embodiment of the present disclosure;
FIG. 7C is a diagram illustrating an operation of providing an application screen being executed before entering a lock mode, if one of icons included in a short-cut UI provided by an electronic device is not selected, according to an embodiment of the present disclosure;
FIGS. 8A and 8B are diagrams illustrating a position where a short-cut UI is provided based on a position of the last checkpoint of an unlock pattern input from a user, according to an embodiment of the present disclosure;
FIG. 9 is a diagram illustrating an operation of providing a short-cut UI based on an unlock pattern input from a user by an electronic device, according to an embodiment of the present disclosure;
FIG. 10 is a diagram illustrating an operation of providing a short-cut UI based on an unlock pattern input from a user by an electronic device, according to an embodiment of the present disclosure;
FIGs. 11A, 11B, 11C, and 11D are diagrams illustrating a short-cut UI provided by an electronic device according to an embodiment of the present disclosure; and
FIG. 12 is a flowchart illustrating a method for providing a short-cut UI in an electronic device based on an unlock pattern input from a user, according to an embodiment of the present disclosure.

### DETAILED DESCRIPTION OF EMBODIMENTS OF THE PRESENT INVENTION

Hereinafter, various embodiments of the present disclosure are described below with reference to the accompanying drawings. However, the present disclosure is not intended to be limited to these specific embodiments, and it is understood that it should include all modifications and/or, equivalents and substitutes within the scope and technical range of the present disclosure. Throughout the drawings, like reference numbers may be used to depict the same or similar elements, features, and structures. A detailed description of known functions and/or configurations will be omitted for the sake of clarity and conciseness.

Herein, the expressions "have", "may have", "include", "comprise", "may include", and "may comprise", as used herein, indicate existence of corresponding features (e.g., elements such as numeric values, functions, operations, or components), but do not exclude presence of additional features.

Herein, expressions such as "A or B", "at least one of A or/and B", "one or more of A or/and B", as used herein, may indicate any and all combinations of one or more of the associated listed items. For example, the terms "A or B", "at least one of A and B", and "at least one of A or B" may refer to all of the cases in which (1) at least one A is included, (2) at least one B is included, and (3) at least one A and at least one B are both included.

Expressions such as "1st", "2nd", "first", or "second", as used herein, may refer to various elements irrespective of the order and/or priority of the corresponding elements, but do not limit the corresponding elements. These expressions may be used to distinguish one element from another element. For instance, "a first user device" and "a second user device" indicate different user devices from each other irrespective of the order and/or priority of the corresponding elements. For example, a first component may be referred to as a second component and vice-versa without departing from the scope of the present disclosure.

When an element , such as a first element, is referred to as being "operatively or communicatively coupled with/to" or "connected to" another element , such as a second element, the first element can be directly coupled with/to or connected to the second element, or an intervening element , such as a third element may be present. By contrast, when an element, such as a first element is referred to as being "directly coupled with/to" or "directly connected to" another element, such as a second element, there are no intervening elements between the first and second elements.

Depending on context, the expression "configured to", as used herein, may mean "suitable for", "having the capacity to", "designed to", "adapted to", "made to", or "capable of'. The term "configured to" does not necessarily indicate only "specifically designed to" using hardware. Instead, the expression "a device configured to" may indicate that the device is "capable of" operating together with another device or other components. For example, a "processor configured to perform A, B, and C" may indicate a generic-purpose processor (e.g., a central processing unit (CPU) or an application processor) that may perform corresponding operations by executing one or more software programs and stores a dedicated processor (e.g., an embedded processor) for performing a corresponding operation.

An electronic device according to an embodiment of the present disclosure may include a smart phone, a tablet personal computer (PC), a mobile phone, a video telephone, an electronic book reader, a desktop PC, a laptop PC, a netbook computer, a workstation, a server, a personal digital assistant (PDA), a portable multimedia player (PMP), a Motion Picture Experts Group (MPEG-1 or MPEG-2) Audio Layer 3 (MP3) player, a mobile medical device, a camera, or a wearable device (e.g., an accessory-type wearable device, such as a watch, a ring, a bracelet, an anklet, a necklace, glasses, contact lenses, or a head-mounted-device (HMDs), fabric or a clothing integral wearable device, such as electronic clothes, a body-mounted wearable device, such as a skin pad or a tattoos, or an implantable wearable devices, such as implantable circuits).

The electronic device may also be a smart home appliance, such as a television (TV), a digital versatile disk (DVD) player, an audio player, a refrigerator, an air conditioner, a cleaner, an oven, a microwave oven, a washing machine, an air cleaner, a set-top box, a home automation control panel, a security control panel, a TV box (e.g., Samsung HomeSync®, Apple TV®, or Google TV®), a game console (e.g., Xbox® and PlayStation®), an electronic dictionary, an electronic key, a camcorder, or an electronic picture frame.

The electronic device may also be a medical device, such as a portable medical measurement device (e.g., a blood glucose meter, a heart rate meter, a blood pressure meter, a thermometer, etc.), a magnetic resonance angiography (MRA) device, a magnetic resonance imaging (MRI) device, a computed tomography (CT) device, a scanner, an ultrasonic device, etc.), a navigation device, a global navigation satellite system (GNSS) device, an event data recorder (EDR), a flight data recorder (FDR), a vehicle infotainment device, electronic equipment for a vessels (e.g., a navigation system, a gyrocompass, etc.), avionics, a security device, a head unit for a vehicle, an industrial or home robot, an automatic teller's machine (ATMs), a point of sales (POS) device, or Internet of Things device (e.g., a light bulb, a sensor, an electric or gas meter, a sprinkler devices, a fire alarm, a thermostat, a street lamp, a toaster, exercise equipment, a hot water tank, a heater, a boiler, etc.).

The electronic device may also be a part of furniture or a building/structure, an electronic board, an electronic signature receiving device, a projector, or a measuring instrument (e.g., a water meter, an electricity meter, a gas meters, a wave meter, etc.).

The electronic devices according to various embodiments of the present disclosure may be flexible electronic devices.

An electronic device may be one or more combinations of the above-described example devices. Also, the electronic device is not limited to the above-described devices, and may include a new or different electronic device.

The term "user", as used herein, may refer to a person who uses an electronic device or may refer to a device (e.g., an artificial intelligence (AI) electronic device) that uses the electronic device.

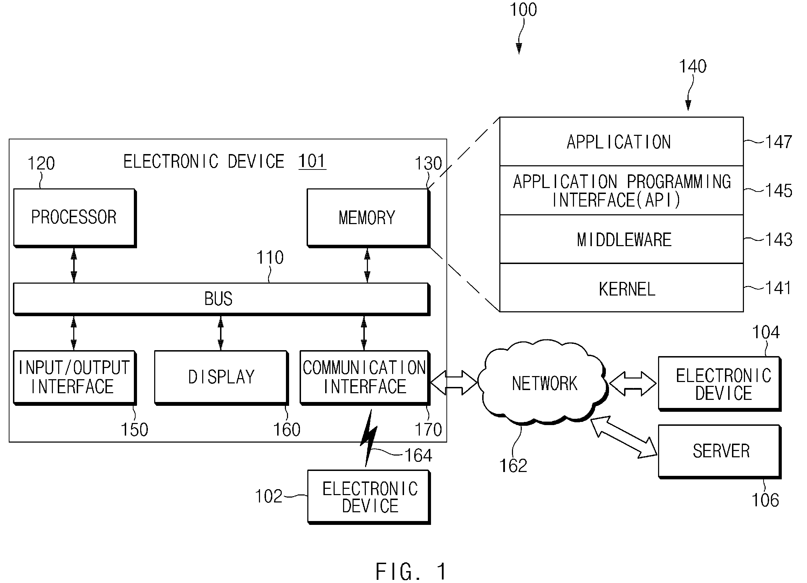

FIG. 1 is a block diagram illustrating a configuration of an electronic device in a network environment according to an embodiment of the present disclosure.

Referring to FIG. 1, an electronic device 101, e.g., a smartphone, is included in a network environment 100. The electronic device 101 includes a bus 110, a processor 120, a memory 130, an input and output interface 150, a display 160, and a communication interface 170. At least one of the components may be omitted from the electronic device 101, or other components may be additionally included in the electronic device 101.

The bus 110 may be, for example, a circuit that connects the components 120 to 170 with each other and transmits communication (e.g., a control message and/or data) between the components.

The processor 120 may include one or more of a CPU, an application processor (AP), or a communication processor (CP). For example, the processor 120 may perform calculation or data processing about control and/or communication of at least one other component of the electronic device 101.

The memory 130 may include a volatile and/or non-volatile memory. The memory 130 may store, for example, instructions or data associated with at least one other component of the electronic device 101. The memory 130 may store software and/or a program 140. The program 140 includes, for example, a kernel 141, a middleware 143, an application programming interface (API) 145, and/or an application program 147 (or an "application"), etc. At least part of the kernel 141, the middleware 143, or the API 145 may be referred to as an operating system (OS).

The kernel 141 may control or manage, for example, system resources (e.g., the bus 110, the processor 120, or the memory 130, and the like) used to execute an operation or function implemented in the other programs (e.g., the middleware 143, the API 145, or the application program 147). Also, as the middleware 143, the API 145, or the application program 147 accesses a separate component of the electronic device 101, the kernel 141 may provide an interface which may control or manage system resources.

The middleware 143 may play a role as, for example, a go-between such that the API 145 or the application program 147 communicates with the kernel 141 to communicate data.

Also, the middleware 143 may process one or more work requests, received from the application program 147, in the order of priorities. For example, the middleware 143 may provide priorities which may use system resources (e.g., the bus 110, the processor 120, the memory 130, etc.) of the electronic device 101 to at least one of the application program 147. For example, the middleware 143 may perform scheduling or load balancing for the one or more work requests by processing the one or more work requests in the order of the priorities provided to the at least one of the application program 147.

The API 145 may be, for example, an interface in which the application program 147 controls a function provided from the kernel 141 or the middleware 143. For example, the API 145 may include at least one interface or function (e.g., an instruction) for performing file control, window control, image processing, text control, etc.

The input and output interface 150 may transmit instructions or data input from a user or another external device to another component (or other components) of the electronic device 101. The input and output interface 150 may also output instructions or data received from another component (or other components) of the electronic device 101 to the user or another external device.

The display 160 may include, for example, a liquid crystal display (LCD), a light emitting diode (LED) display, an organic LED (OLED) display, a microelectromechanical systems (MEMS) display, or an electronic paper display. The display 160 may display, for example, a variety of content (e.g., text, images, videos, icons, or symbols, etc.) to the user. The display 160 may include a touch screen, and may receive, for example, touch, gesture, proximity, or a hovering input using an electronic pen or part of a body of the user.

The communication interface 170 may establish communication between, for example, the electronic device 101 and an external device (e.g., a first external electronic device 102, a second external electronic device 104, or a server 106). For example, the communication interface 170 may connect to a network 162 through wireless communication or wired communication and may communicate with the second external electronic device 104 or the server 106).

The wireless communication may use, for example, at least one of long term evolution (LTE), LTE-advanced (LTE-A), code division multiple access (CDMA), wideband CDMA (WCDMA), universal mobile telecommunications system (UMTS), wireless broadband (WiBro), or global system for mobile communications (GSM), etc., as a cellular communication protocol. The wireless communication may also include, for example, local-area communication 164. The local-area communication 164 may include, for example, at least one of Wi-Fi communication, Bluetooth (BT) communication, near field communication (NFC), or global navigation satellite system (GNSS) communication, and the like. The GNSS may include, for example, at least one of a global positioning system (GPS), a Glonass satellite navigation system, a Beidou satellite navigation system (hereinafter referred to as "Beidou"), or a Galileo (i.e., the European global satellite-based navigation system) according to an available area or a bandwidth, and the like. Herein, the term "GPS" may be interchangeably with "GNSS". The wired communication may include at least one of, for example, universal serial bus (USB) communication, high definition multimedia interface (HDMI) communication, recommended standard 232 (RS-232) communication, or plain old telephone service (POTS) communication, and the like. The network 162 may include a telecommunications network, for example, at least one of a computer network (e.g., a local area network (LAN) or a wide area network (WAN)), the Internet, or a telephone network.

Each of the first and second external electronic devices 102 and 104 may be the same device as or a different device from the electronic device 101. According to an embodiment of the present disclosure, the server 106 may include a group of servers. All or some of operations executed in the electronic device 101 may be executed in another electronic device or a plurality of electronic devices, such as the first external electronic devices 102, the second external electronic devices 104, or the server 106. If the electronic device 101 must perform a function or service automatically or according to a request, the electronic device 101 may request another device such as the first and second external electronic devices 102, the second external electronic devices 104, or the server 106) to perform at least part of the function or service, rather than executing the function or service for itself or in addition to the function or service. The other electronic device (e.g., the first external electronic devices 102, the second external electronic devices 104, or the server 106) may execute the requested function or the added function and may transmit the result of execution of the function to the electronic device 101. The electronic device 101 may process the received result without change or additionally and may provide the requested function or service. For this purpose, for example, cloud computing technologies, distributed computing technologies, or client-server computing technologies may be used.

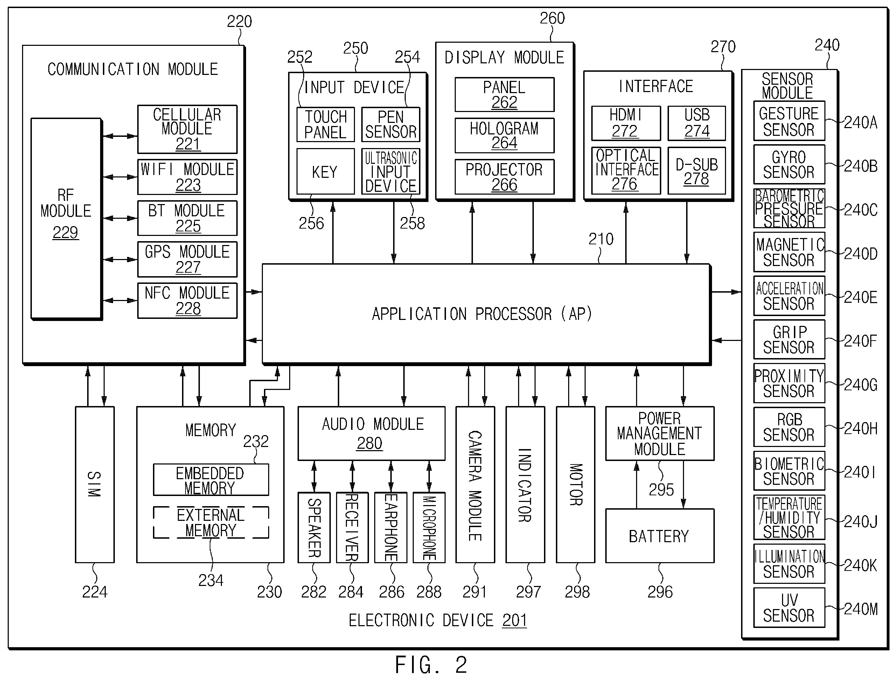

FIG. 2 is a block diagram illustrating a configuration of an electronic device according to an embodiment of the present disclosure.

Referring to FIG. 2, an electronic device 201 may include, for example, all or part of the electronic device 101 of FIG. 1. The electronic device 201 includes one or more processors 210 (e.g., application processors (APs)), a communication module 220, a subscriber identification module (SIM) 224, a memory 230, a sensor module 240, an input device 250, a display 260, an interface 270, an audio module 280, a camera module 291, a power management module 295, a battery 296, an indicator 297, and a motor 298.

The processor 210 may drive, for example, an OS or an application program to control a plurality of hardware or software components connected thereto and may process and compute a variety of data. The processor 210 may be implemented with, for example, a system on chip (SoC). The processor 210 may further include a graphic processing unit (GPU) and/or an image signal processor. The processor 210 may include at least some (e.g., a cellular module 221) of the other components of the electronic device 201 of FIG. 2. The processor 210 may load instructions or data received from at least one of the other components (e.g., a non-volatile memory) of the electronic device 201 into a volatile memory to process the data and may store various data in a non-volatile memory.

The communication module 220 may have a same or similar configuration as a configuration of the communication interface 170 of FIG. 1. The communication module 220 includes, for example, the cellular module 221, a Wi-Fi module 223, a BT module 225, a GNSS module 227 (e.g., a GPS module, a Glonass module, a Beidou module, or a Galileo module), a near field communication (NFC) module 228, and a radio frequency (RF) module 229.

The cellular module 221 may provide, for example, a voice call service, a video call service, a text message service, or an Internet service, etc. through a communication network. The cellular module 221 may identify and authenticate the electronic device 201 in a communication network using the SIM 224 (e.g., a SIM card). The cellular module 221 may perform at least part of the functions that may be provided by the processor 210. According to an embodiment of the present disclosure, the cellular module 221 may include a communication processor (CP).

Each of the Wi-Fi module 223, the BT module 225, the GNSS module 227, or the NFC module 228 may include a processor for processing data transmitted and received through the corresponding module. At least some (e.g., two or more) of the cellular module 221, the Wi-Fi module 223, the BT module 225, the GNSS module 227, and the NFC module 228 may be included in one integrated chip (IC) or one IC package.

The RF module 229 may transmit and receive, for example, a communication signal (e.g., an RF signal). Though not shown, the RF module 229 may include, for example, a transceiver, a power amplifier module (PAM), a frequency filter, or a low noise amplifier (LNA), or an antenna, etc. According to another embodiment of the present disclosure, at least one of the cellular module 221, the Wi-Fi module 223, the BT module 225, the GNSS module 227, or the NFC module 228 may transmit and receive an RF signal through a separate RF module.

The SIM 224 may include, for example, a SIM card and/or an embedded SIM. The SIM 224 may include unique identification information (e.g., an integrated circuit card identifier (ICCID)) or subscriber information (e.g., an international mobile subscriber identity (IMSI)).

The memory 230 (e.g., a memory 130 of FIG. 1) includes, for example, an embedded memory 232, and an external memory 234. The embedded memory 232 may include at least one of, for example, a volatile memory (e.g., a dynamic random access memory (DRAM), a static RAM (SRAM), a synchronous dynamic RAM (SDRAM), etc.), or a non-volatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a flash memory (e.g., a NAND flash memory or a NOR flash memory, etc.), a hard drive, or a solid state drive (SSD)).

The external memory 234 may include a flash drive, for example, a compact flash (CF), a secure digital (SD), a micro-SD, a mini-SD, an extreme digital (xD), a multimedia card (MMC), a memory stick, etc. The external memory 234 may operatively and/or physically connect with the electronic device 201 through various interfaces.

The sensor module 240 may measure, for example, a physical quantity or may detect an operation state of the electronic device 201, and may convert the measured or detected information to an electric signal. The sensor module 240 includes, for example, a gesture sensor 240A, a gyro sensor 240B, a barometric pressure sensor 240C, a magnetic sensor 240D, an acceleration sensor 240E, a grip sensor 240F, a proximity sensor 240G, a color sensor 240H (e.g., red, green, blue (RGB) sensor), a biometric sensor 240I, a temperature/humidity sensor 240J, an illumination sensor 240K, and an ultraviolet (UV) sensor 240M. Additionally or alternatively, the sensor module 240 may further include, for example, an e-nose sensor, an electromyography (EMG) sensor, an electroencephalogram (EEG) sensor, an electrocardiogram (ECG) sensor (not shown), an infrared (IR) sensor, an iris sensor , a fingerprint sensor, etc. The sensor module 240 may further include a control circuit for controlling at least one or more sensors included therein. According to an embodiment of the present disclosure, the electronic device 201 may further include a processor configured to control the sensor module 240, as part of the processor 210 or to be independent of the processor 210. While the processor 210 is in a sleep state, the electronic device 201 may control the sensor module 240.

The input device 250 includes, for example, a touch panel 252, a (digital) pen sensor 254, a key 256, and an ultrasonic input unit 258. The touch panel 252 may use at least one of, for example, capacitive, resistive, infrared, and ultrasonic input methods. Also, the touch panel 252 may further include a control circuit. The touch panel 252 may further include a tactile layer and may provide a tactile reaction to a user.

The (digital) pen sensor 254 may be, for example, part of the touch panel 252 or may include a separate sheet for recognition. The key 256 may include, for example, a physical button, an optical key, or a keypad. The ultrasonic input unit 258 may allow the electronic device 201 to detect a sound wave using a microphone 288 and to verify data through an input tool generating an ultrasonic signal.

The display module 260 (e.g., the display 160 of FIG. 1) includes a panel 262, a hologram device 264, and a projector 266. The panel 262 may include a same or similar configuration as a configuration of the display 160. The panel 262 may be implemented to be, for example, flexible, transparent, or wearable. The panel 262 and the touch panel 252 may be integrated into one module. The hologram device 264 may show a stereoscopic image in a space using interference of light. The projector 266 may project light onto a screen to display an image. The screen may be positioned, for example, inside or outside the electronic device 201. According to an embodiment of the present disclosure, the display 260 may further include a control circuit for controlling the panel 262, the hologram device 264, or the projector 266.

The interface 270 includes, for example, a high-definition multimedia interface (HDMI) 272, a universal serial bus (USB) 274, an optical interface 276, or a D-subminiature 278. The interface 270 may be included in, for example, a communication interface 170 shown in FIG. 1. Additionally or alternatively, the interface 270 may include, for example, a mobile high definition link (MHL) interface, an SD card/multimedia card (MMC) interface, or an infrared data association (IrDA) standard interface.

The audio module 280 may convert a sound and an electric signal in dual directions. At least part of components of the audio module 280 may be included in, for example, an input and output interface 150 shown in FIG. 1. The audio module 280 may process sound information input or output through, for example, a speaker 282, a receiver 284, an earphone 286, or the microphone 288, and the like.

The camera module 291 may be a device which captures a still image and a moving image. According to an embodiment of the present disclosure, the camera module 291 may include one or more image sensors (e.g., a front sensor or a rear sensor), a lens, an image signal processor (ISP) (not shown), or a flash (e.g., an LED or a xenon lamp).

The power management module 295 may manage, for example, power of the electronic device 201. According to an embodiment of the present disclosure, though not shown, the power management module 295 may include a power management integrated circuit (PMIC), a charger IC or a battery gauge. The PMIC may have a wired charging method and/or a wireless charging method. The wireless charging method may include, for example, a magnetic resonance method, a magnetic induction method, or an electromagnetic method, etc. An additional circuit for wireless charging, for example, a coil loop, a resonance circuit, or a rectifier, and the like may be further provided. The battery gauge may measure, for example, the remaining capacity of the battery 296 and voltage, current, or temperature thereof while the battery 296 is charged. The battery 296 may include, for example, a rechargeable battery or a solar battery.

The indicator 297 may display a specific state of the electronic device 2401 or part (e.g., the processor 210) thereof, such as, for example, a booting state, a message state, or a charging state, and the like. The motor 298 may convert an electric signal into mechanical vibration and may generate vibration or a haptic effect, and the like. Though not shown, the electronic device 201 may include a processing unit (e.g., a GPU) for supporting a mobile TV. The processing unit for supporting the mobile TV may process media data according to standards, for example, a digital multimedia broadcasting (DMB) standard, a digital video broadcasting (DVB) standard, and the like.

Each of the above-escribed elements of the electronic device according to an embodiment of the present disclosure may be configured with one or more components, and names of the corresponding elements may be changed according to the type of the electronic device. The electronic device according to an embodiment of the present disclosure may include at least one of the above-mentioned elements, some elements may be omitted from the electronic device, or other additional elements may be further included in the electronic device. Also, some of the elements of the electronic device according to an embodiment of the present disclosure may be combined with each other to form one entity, thereby making it possible to perform the functions of the corresponding elements in the same manner as the corresponding elements before the combination.

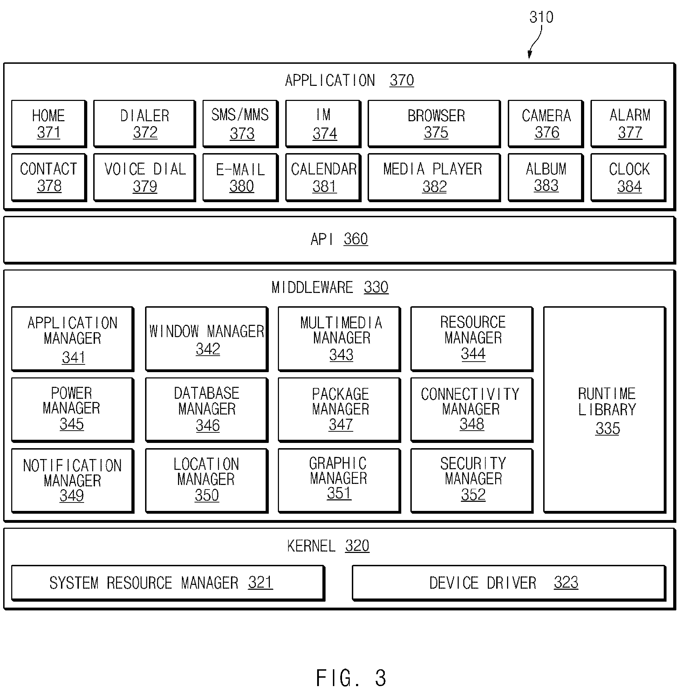

FIG. 3 is a block diagram illustrating a configuration of a program module according to an embodiment of the present disclosure.

Referring to FIG. 3, a program module 310 may include an OS for controlling resources associated with an electronic device (e.g., an electronic device 101 of FIG. 1) and/or various applications which are executed on the OS.

The program module 310 includes a kernel 320, a middleware 330, an API 360, and an application 370. At least part of the program module 310 may be preloaded on the electronic device, or may be downloaded from an external electronic device (e.g., the first external electronic device 102, the second external electronic device 104, or the server 106 of FIG. 1).

The kernel 320 includes, for example, a system resource manager 321 and/or a device driver 323. The system resource manager 321 may control, assign, or collect system resources. The system resource manager 321 may include a process management unit, a memory management unit, a file system management unit, etc. The device driver 323 may include, for example, a display driver, a camera driver, a Bluetooth (BT) driver, a shared memory driver, a universal serial bus (USB) driver, a keypad driver, a wireless-fidelity (Wi-Fi) driver, an audio driver, or an inter-process communication (IPC) driver.

The middleware 330 may provide, for example, functions the application 370 needs in common, and may provide various functions to the application 370 through the API 360 such that the application 370 efficiently uses limited system resources in the electronic device. The middleware 330 includes at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, and a security manager 352.

The runtime library 335 may include, for example, a library module used by a compiler to add a new function through a programming language while the application 370 is executed. The runtime library 335 may perform a function about input and output management, memory management, or an arithmetic function.

The application manager 341 may manage, for example, a life cycle of at least one application of the application 370. The window manager 342 may manage graphic user interface (GUI) resources used on a screen of the electronic device. The multimedia manager 343 may identify a format necessary for reproducing various media files and may encode or decode a media file using a codec corresponding to the corresponding format. The resource manager 344 may manage source codes of at least one of the application 370, and may manage resources of a memory, a storage space, etc.

The power manager 345 may act together with, for example, a basic input/output system (BIOS) and the like, may manage a battery or a power source, and may provide power information necessary for an operation of the electronic device. The database manager 346 may generate, search, or change a database to be used in at least one of the application 370. The package manager 347 may manage installation or update of an application distributed in the form of a package file.

The connectivity manager 348 may manage, for example, a wireless connection, such as a Wi-Fi connection, a BT connection, etc. The notification manager 349 may display or notifications of events, such as an arrival message, an appointment, and proximity notification, by a method that does not disturb to the user. The location manager 350 may manage location information of the electronic device. The graphic manager 351 may manage a graphic effect to be provided to the user or a UI related to the graphic effect. The security manager 352 may provide all security functions necessary for system security, user authentication, etc. When the electronic device has a phone function, the middleware 330 may further include a telephony manager for managing a voice or video communication function of the electronic device.

The middleware 330 may include a middleware module which configures combinations of various functions of the above-described components. The middleware 330 may provide a module that specializes according to kinds of OSs to provide a differentiated function. The middleware 330 may dynamically delete some old components or may add new components.

The API 360 may be, for example, a set of API programming functions, and may be provided with components that vary according to OS. For example, API set may be provided according to platforms, or two or more API sets may be provided according to platforms.

The application 370 includes one or more of, for example, a home application 371, a dialer application 372, a short message service/multimedia message service (SMS/MMS) application 373, an instant message (IM) application 374, a browser application 375, a camera application 376, an alarm application 377, a contact application 378, a voice dial application 379, an e-mail application 380, a calendar application 381, a media player application 382, an album application 383, a clock application 384, a health care application (e.g., an application for measuring an exercise quantity, a blood sugar level of a user, etc.), or an environment information application (e.g., an application for providing atmospheric pressure information, humidity information, or temperature information, etc.), etc.

The application 370 may include an application (hereinafter, an "information exchange application") for exchanging information between the electronic device, and an external electronic device. The information exchange application may include, for example, a notification relay application for transmitting specific information to the external electronic device or a device management application for managing the external electronic device.

For example, the notification relay application may include a function of transmitting notification information, which is generated by other applications (e.g., the SMS/MMS application, the e-mail application, the health care application, the environment information application, etc.) of the electronic device, to an external electronic device. The notification relay application may receive, for example, notification information from the external electronic device, and may provide the received notification information to the user of the electronic device 101.

The device management application may manage (e.g., install, delete, or update), for example, at least one (e.g., a function of turning on/off the external electronic device itself (or partial components) or a function of adjusting brightness (or resolution) of a display) of functions of the an external electronic device which communicates with the electronic device, an application which operates in the external electronic device, or a service (e.g., a call service or a message service) provided from the external electronic device.

The application 370 may include an application (e.g., the health card application of a mobile medical device) that is preset according to attributes of the external electronic device. The application 370 may include an application received from the external electronic device. The application 370 may include a preloaded application or a third party application that may be downloaded from a server. Names of the components of the program module 310 according to various embodiments of the present disclosure may differ according to kinds of OSs.

At least part of the program module 310 may be implemented with software, firmware, hardware, or a combination thereof. At least part of the program module 310 may be implemented (e.g., executed) by, for example, a processor. At least part of the program module 310 may include, for example, a module, a program, a routine, sets of instructions, a process, etc. for performing one or more functions.

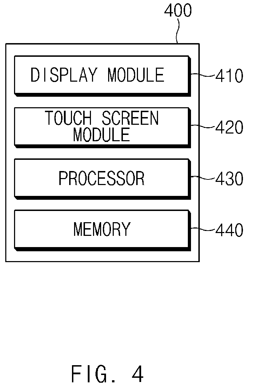

FIG. 4 is a block diagram illustrating a configuration of an electronic device according to an embodiment of the present disclosure.

Referring to FIG. 4, an electronic device 400 includes a display 410, a touch circuit 420, a processor 430, and a memory 440. However, the scope and spirit of the prevent disclosure may not be limited thereto. For example, various modifications to the components of the electronic device 400 are possible in accordance with embodiments of the present disclosure. For example, the electronic device 400 may further include a user interface for receiving any command or information from its user. In this case, the user interface may include an input device, such as a keyboard and/or a mouse, and may include a GUI displayed on a screen of the electronic device 400.

The display 410 may display a variety of content (e.g., an application execution screen, text, an image, a video, an icon, or a symbol, and the like) on the screen of the electronic device 400. The screen may include, for example, a liquid crystal display (LCD), a light emitting diode (LED) display, an organic LED (OLED) display, a microelectromechanical systems (MEMS) display, an electronic paper display, etc.

The touch circuit 420 may process a user input received from the user. The user input may be a touch input using a finger or a stylus (e.g., an electronic pen) of the user. The user input may include a non-contact input, for example, a hover input, which may be provided through an electric change, although the finger or stylus of the user is not in direct contact with the screen. A touch input described below may include the hover input.

Also, the touch circuit 420 may recognize a type of the touch input and may process the recognized touch input. The type of the user input may include, for example, touch input, touch move, touch release, touch and drag, drag and drop, etc.

The processor 430 may be implemented with, for example, an SoC, and may include one or more of a CPU, a GPU, an image signal processor, an AP, or a CP. The processor 430 may load instructions or data, received from at least one of the other components (e.g., the display 410 and the touch circuit 420), into the memory 440 and may store a variety of data in the memory 440.

The processor 430 may display an unlock UI on the screen through the display 410. If the screen of the electronic device 400 is converted from an inactive state to an active state, the unlock UI may be displayed as an initial screen. The inactive state may be a state in which no objects are displayed on a display panel corresponding to the screen. The active state may be a state where at least one or more objects are displayed on the display panel. For one example, when a sleep button, a power button, a home button, etc. of the electronic device 400 is pressed or touched, the screen may be converted from the inactive state to the active state. For another example, the screen may be converted from the inactive state to the active state according to a predetermined operation. The predetermined operation may include an operation of receiving a call or message from another device or an operation where an event such as notification occurs in the electronic device 400.

The unlock UI may include a plurality of checkpoints. As shown in drawings described later herein, according to an embodiment of the present disclosure, the unlock UI may include nine checkpoints. However, embodiments of the present disclosure are not, and the unlock UI may include another number of checkpoints.

The processor 430 may receive a touch input, for inputting an unlock solution to the unlock UI, through the touch circuit 420. The unlock solution may be a touch input on at least two of the plurality of checkpoints. An order of the touch input on the at least two checkpoints may be considered by the unlock solution.

The unlock solution may include a method using an unlock pattern and/or a method using an unlock password. The unlock pattern may be to connect at least two checkpoints to each other by touching and dragging to at least two of the checkpoints. The unlock password may be input by touching or clicking the at least two check points in order. Each of the checkpoints may be a number or character included in a keypad of the electronic device 400. Therefore, the unlock pattern according to an embodiment of the present disclosure is not limited to connecting at least two checkpoints by touching and dragging at least two checkpoints.

In addition, if an unlock pattern or an unlock password is not set in the electronic device 400, the unlock solution may include an operation (hereinafter referred to as an "unlock gesture") of receiving input of a drag for at least a certain distance in one direction from one point on the screen. In this case, an unlock UI may not include a plurality of checkpoints.

The processor 430 may determine whether an unlock solution input through the touch circuit 420 corresponds to an unlock solution stored in the memory 440.

If the unlock solution input through the touch circuit 420 corresponds to the unlock solution stored in the memory 440, the processor 430 may display a short-cut UI on the unlock UI. For example, if the input unlock solution is an unlock pattern stored in the memory 440, the short-cut UI may be displayed at a time when a touch-move of the user reaches the last checkpoint of the stored unlock pattern. Herein, a "touch-move" refers to, after a touch input has been performed with respect to a position on a touch screen, moving the same touch input to a different position before ending the touch input. Also, if the input unlock solution is an unlock password stored in the memory 440, the short-cut UI may be displayed if the user long-presses the last number or character of the stored unlock password. If the input unlock solution is an unlock gesture stored in the memory 440, the short-cut UI may be displayed if a touch input is dragged at least a certain distance is then long pressed.

A position of the displayed short-cut UI may be determined to be close to a position of the last checkpoint of the input unlock solution. For example, when using an unlock pattern or an unlock password, a position of the displayed short-cut UI may be determined to be close to a position of the last checkpoint of an unlock pattern or an unlock password stored in the memory 440. Also, when using an unlock gesture, a position of the displayed short-cut UI may be determined to be close to a position where the touch input is long-pressed. The short-cut UI may include a plurality of objects, and each of the plurality of objects may be an application icon.

An example according to an embodiment of the present disclosure, in which a position of the last checkpoint or a position where the touch input is long pressed, for determining a position where the short-cut UI is displayed, is a position where the unlock solution is ended, is described as follows.

If a touch input for inputting the unlock solution is touch-released on the last checkpoint of the unlock solution, the processor 430 may display a home screen or an application screen that was already being executed before the electronic device 400 entered a lock mode, through the display 410.

If the touch input for inputting the unlock solution is touch-moved from the last checkpoint of the unlock solution to one of icons included in the short-cut UI and is then touch-released on the icon, the processor 430 may display an application screen corresponding to the icon, through the display 410. Herein, a "touch move" refers to an operation where a finger of the user or a stylus, for example, moves in a state where the finger or the stylus maintains contact with a touch panel of the electronic device 400. Herein, a "touch release" refers to an operation where the finger of the user or the stylus, which is in contact with the touch panel, is detached from the touch panel.

According to an embodiment of the present disclosure, one of the icons included in the short-cut UI may be selected by a touch input. For example, when using an unlock password or an unlock gesture, the short-cut UI may be displayed in response to a long press input. More specifically, the user may release the long press input, and touch one of icons included in the short-cut UI in order to execute a desired application. Alternatively, one of the icons included in the short-cut UI may be selected by inputting a previously defined gesture with respect to the corresponding icon.

If an unlock solution input through the touch circuit 420 does not correspond to an unlock solution stored in the memory 440, the processor 430 may inform the user that the input unlock solution is wrong. When the user informed that the input unlock solution is wrong, the short-cut UI may not be displayed.

The plurality of icons included in the short-cut UI may be determined through various criteria in the processor 430. Various criteria for determining the plurality of icons included in the short-cut UI according to an embodiment of the present disclosure are described as follows.

The processor 430 may receive, from the user through the touch circuit 420, a user input for setting a plurality of icons to be included in the short-cut UI. The processor 430 may determine the plurality of icons to be included in the short-cut UI based on the user input.

The processor 430 may inquire about an application execution history stored in the memory 440 and determine a plurality of icons to be included in the short-cut UI based on the inquired application execution history. For example, the processor 430 may include applications in the short-cut UI in a descending order of execution history during a predetermined period of time. The order of the execution history, for example, may be determined by an order of most recently-executed application, the number of times executing each application, or the total duration of time executing each application during the predetermined period of time.

The processor 430 may determine, when an unconfirmed notification event occurs, for each of at least one application a corresponding icon to be included in the short-cut UI. When the notification event corresponds to all of the applications, there may be too many applications for which to include corresponding icons in the short-cut UI. Therefore, the processor 430 may limit the applications to only a portion of applications. For example, a plurality of icons to be included in the short-cut UI may be limited to icons corresponding to a call application, a text message application, a chat application, a social network service (SNS) application, etc.

The electronic device 400 may include a plurality of applications. The plurality of applications may include one type or various types of applications. For example, a plurality of camera photographing applications, a plurality of music appreciation applications, and/or a plurality of web browsing applications may be installed in the electronic device 400.

The processor 430 may include icons that each represent a plurality of applications in the short-cut UI. As described above, the icons that each represent a plurality of applications may be determined for each of a plurality of functions. For example, there may be an icon representing the plurality of camera photographing applications, an icon representing the plurality of music appreciation applications, and/or an icon representing the plurality of web browsing applications.

If the touch input for inputting the unlock solution is touched-moved on one of a plurality of icons included in the short-cut UI (i.e., after a user inputs a final touch for unlocking the device, the user moves the same touch to one of the plurality of icons), the processor 430 may display a new short-cut UI including an application of a type corresponding to the icon.

The processor 430 may include a plurality of icons as objects in the short-cut UI. According to an embodiment of the present disclosure, a plurality of application icons may be included in the short-cut UI, each of which may be included as one object in the short-cut UI.

Two or more application icons may be included as one object in the short-cut UI. A plurality of application icons included in the one object may be icons for a plurality of applications where frequency used together is higher.

For example, when two or more application icons are represented as one object in which the application icons are displayed as overlapping each other. If the touch input is touch-moved on one of a plurality of icons included in the short-cut UI and is then touch-released on the object including the overlapping icons, the processor 430 may display at least two applications, corresponding to the icon, together.

When an input unlock solution corresponds to an unlock solution stored in the memory 440, if the short-cut UI is displayed, the processor 430 may remove a plurality of checkpoints corresponding to the unlock solution from display.

The memory 440 may store, for example, instructions for operations performed in the processor 430. More specifically, data stored in the memory 440 may include data input and output between components included in the electronic device 400 and data input and output between the electronic device 400 and components outside the electronic device 400. For example, the memory 440 may store information about an unlock solution set by the user. The memory 440 may store data for a plurality of applications installed in the electronic device 400 and may store an execution frequency for each of the plurality of applications.

This memory 440 may include an embedded memory or an external memory. The embedded memory may include at least one of, for example, a volatile memory (e.g., a DRAM, an SRAM, an SDRAM, etc.), or a non-volatile memory (e.g., an OTPROM, a PROM, an EPROM, an EEPROM, a mask ROM, a flash ROM, a flash memory (e.g., a NAND flash memory or a NOR flash memory, and the like), a hard drive, or an SSD).

The external memory may include a flash drive, for example, a CF, an SD, a micro-SD, a mini-SD, an xD, an MMC, a memory stick, etc. The external memory may operatively and/or physically connect with the electronic device 400 through various interfaces.

Each of the display 410, the touch circuit 420, the processor 430, and the memory 440 may be implemented as independent of the electronic device 400 in accordance with embodiments of the present disclosure. Further, one or more of the display 410, the touch circuit 420, the processor 430, and the memory 440 may be implemented to be integrated into a single component in the electronic device 400.

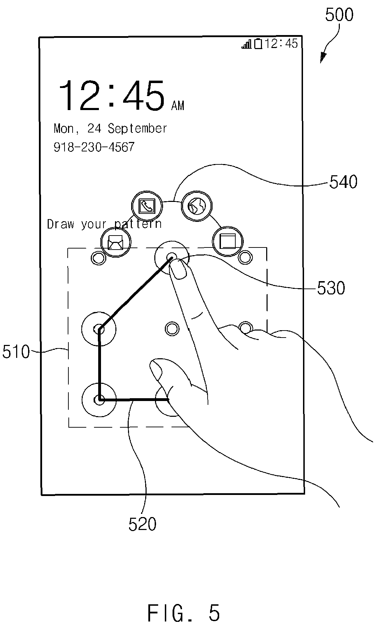

FIG. 5 is a diagram illustrating an operation of providing a short-cut UI in an electronic device based on an unlock pattern input from a user, according to an embodiment of the present disclosure.

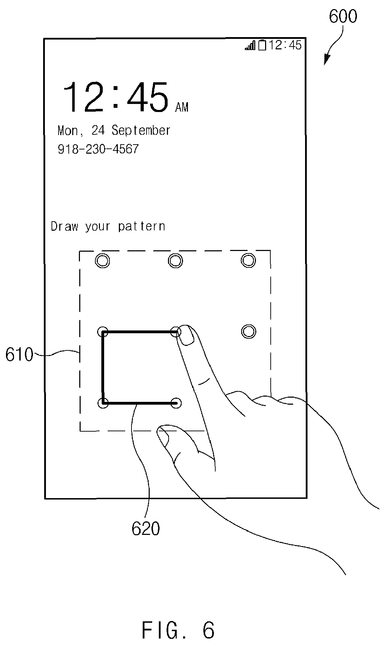

Referring to FIG. 5, the display 410 of the electronic device 400 of FIG. 4 displays an unlock UI 500 includes a plurality of checkpoints 510. The unlock UI 500 includes today's date, a current time, and contact information or emergency contact information of the electronic device 400. The configuration included in the unlock UI 500 may be also applied to FIGs. 6 to 10.

The electronic device 400 may receive an unlock pattern 520 for at least two or more of a plurality of checkpoints 510 from its user. If the last checkpoint of the unlock pattern 520 is a checkpoint 530, the processor 430 of FIG. 4 may control the display 410 to display the short-cut UI 540. The short-cut UI 540 may be displayed at a position corresponding to the checkpoint 530.

A text message application icon, a phone application icon, a web browsing application icon, and a scheduling application icon are included in the short-cut UI 540. The application icons included in the short-cut UI 540 may be determined by the processor 430, according to an embodiment of the present disclosure described with reference to FIG. 4.

FIG. 6 is a diagram illustrating an unlock UI, if an unlock pattern input from a user is different from an unlock pattern stored in a memory, according to an embodiment of the present disclosure.

Referring to FIG. 6, the display 410 of the electronic device 400 of FIG. 4 displays an unlock UI 600 that includes a plurality of checkpoints 610. The electronic device 400 may receive the unlock pattern 620 for the plurality of checkpoints 610 on the unlock UI 600, and the processor 430 may not control the display 410 to display a short-cut UI.

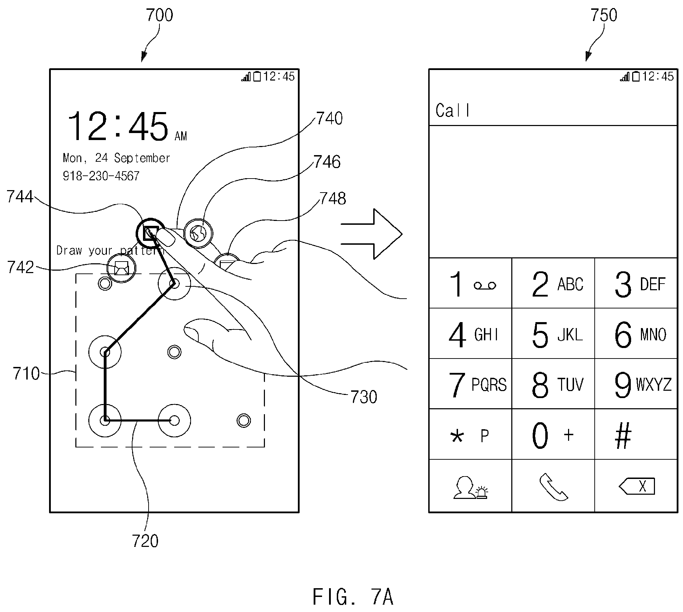

FIG. 7A is a diagram illustrating an operation of providing an application screen corresponding to a selected icon, if the one of a plurality of icons included in a short-cut UI provided by an electronic device is selected, based on various embodiments of the present disclosure.

Referring to FIG. 7A, the electronic device 400 of FIG. 4 may receive an unlock pattern 720 for a plurality of checkpoints 710 from the user of the electronic device 400. If the last checkpoint of the unlock pattern 720 is a checkpoint 730, the processor 430 of FIG. 4 may control the display 410 to display the short-cut UI 740. The short-cut UI 740 may be displayed on a position corresponding to the checkpoint 730.

The processor 430 may receive touch-move, from the checkpoint 730 to one (e.g., an application icon 744) of application icons 742, 744, 746, and 748 included in the short-cut UI 740, through the touch circuit 420 of FIG. 4. The touch-move from the checkpoint 730 to the application icon 744 may be performed to be subsequent to the unlock pattern 720. The processor 430 may receive one touch input which is touch-moved to the application icon 744 without being touch-released on the unlock pattern 720. Also, if the touch input is touch-released on the application icon 744, the processor 430 may display the execution screen 750 of a call application corresponding to the application icon 744.

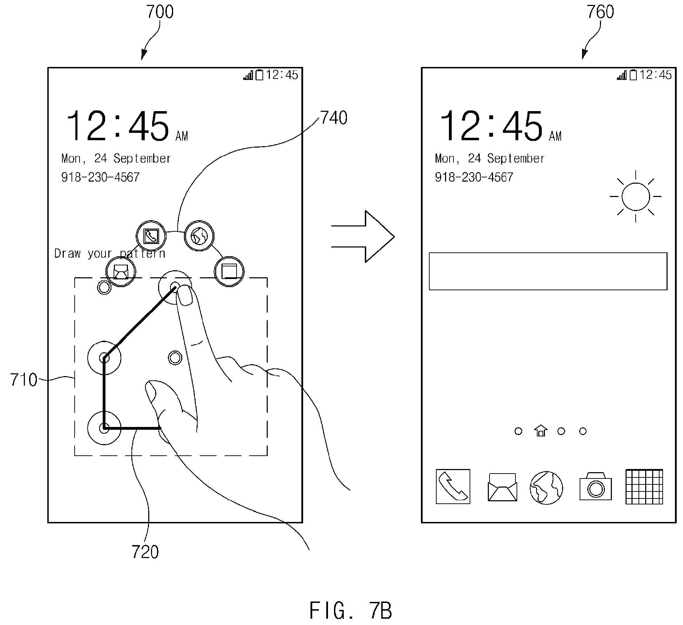

FIG. 7B is a diagram illustrating an operation of providing a home screen, if one of icons included in a short-cut UI provided by an electronic device is not selected, based on various embodiments of the present disclosure.

Referring to FIG. 7B, after a touch input for inputting an unlock pattern 720 reaches a checkpoint 730 and the short-cut UI 740 is then displayed, if the touch input is touch-released on the checkpoint 730, the electronic device 400 may release a lock state and may display the home screen 760.

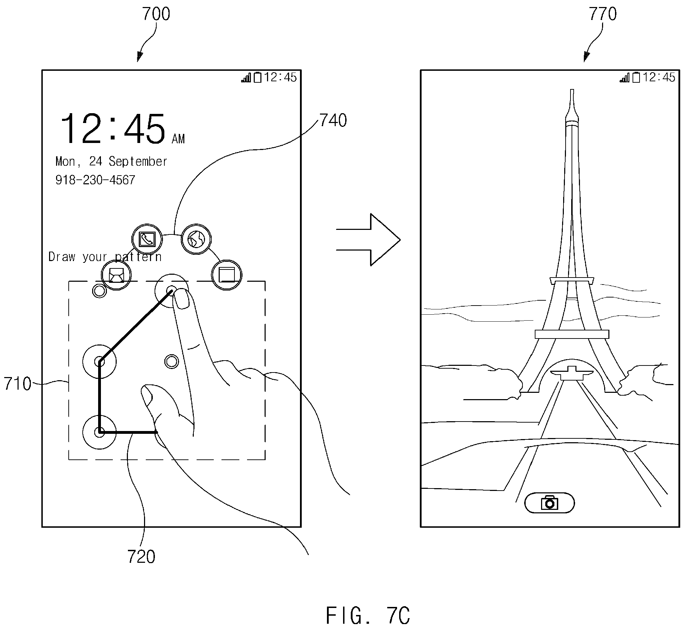

FIG. 7C is a diagram illustrating an operation of providing an application screen being executed before entering a lock mode, if one of icons included in a short-cut UI provided by an electronic device is not selected, according to an embodiment of the present disclosure.

Referring to FIG. 7C, after a touch input for inputting an unlock pattern 720 reaches a checkpoint 730 and a short-cut UI 740 is then displayed by the display 410 of the electronic device 400 of FIG. 4, if the touch input is touch-released on the checkpoint 730, the electronic device 400 may release an unlock state and may display the application screen 770.

The application screen 770 may be an execution screen of a photographing application. For example, if a user of the electronic device 400 presses a sleep button or a power button of the electronic device 400 while using the photographing application or if he or she does not perform any user input during a predetermined time, the electronic device 400 may be converted into a lock mode. Thereafter, the electronic device 400 may release a lock state based on an unlock solution. A displayed screen may be an execution screen of an application being executed immediately before being converted into the lock mode.

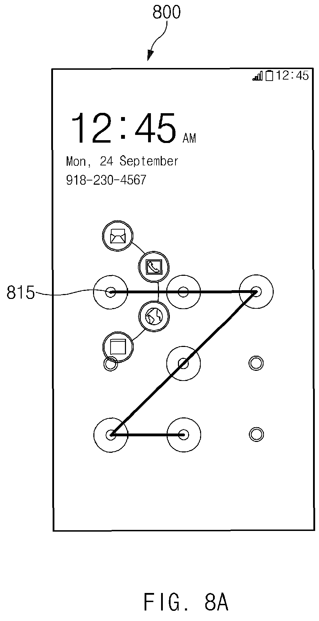

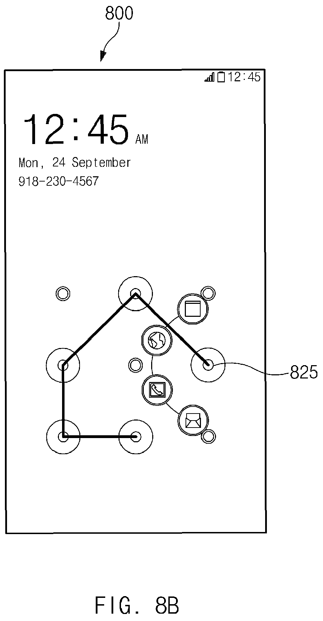

FIGs. 8A and 8B are diagrams illustrating a position where a short-cut UI is provided based on a position of the last checkpoints of unlock patterns input from a user, according to an embodiment of the present disclosure.

Referring to FIG. 8A, if the last checkpoint of an unlock pattern 810 input from the user is the checkpoint 815, a processor 430 of the electronic device of FIG. 4 may control the display 410 to display a short-cut UI on a position corresponding to the checkpoint 815. Similarly, referring to FIG. 8B, if the last checkpoint of an unlock pattern 820 input from the user is the checkpoint 825, the processor 430 of the electronic device 400 of FIG. 4 may control the display 410 to display a short-cut UI on a position corresponding to the checkpoint 825.

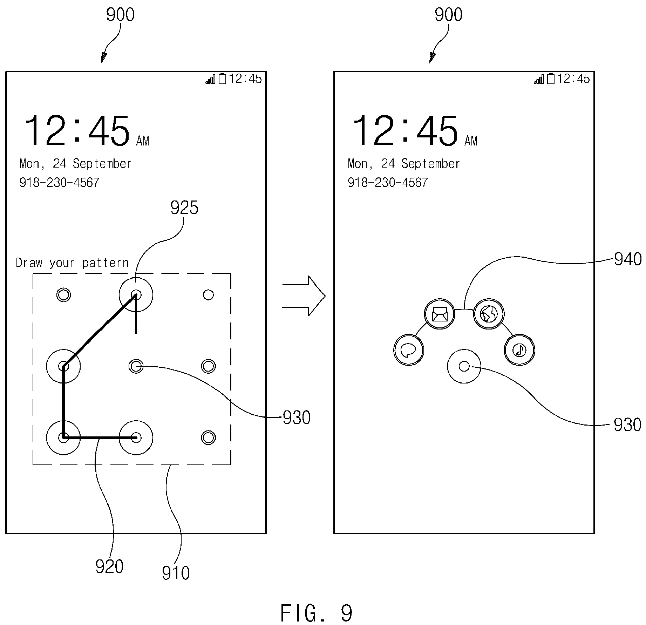

FIG. 9 is a diagram illustrating an operation of providing a short-cut UI based on an unlock pattern input from a user by an electronic device, according to an embodiment of the present disclosure.

Referring to FIG. 9, the electronic device 400 of FIG. 4 may receive the unlock pattern 920 for a plurality of checkpoints 910 from the user. If the last checkpoint of the unlock pattern 920 is a checkpoint 930, the processor 430 of the electronic device 400 may control the display 410 to display the short-cut UI 940. The short-cut UI 940 may be displayed on a position corresponding to the checkpoint 930.

Herein, in contrast to the embodiment of FIG. 5, according to the embodiment of FIG. 9, if the unlock pattern 920 input from the user corresponds to an unlock pattern stored in a memory 440 of the electronic device 400, the processor 430 may control the display 410 to display the short-cut UI 940 and may simultaneously remove the plurality of checkpoints 910 except for the last checkpoint 930 included in the unlock pattern 920. The processor 430 may control removal of the last checkpoint 930 included in the unlock pattern 920.

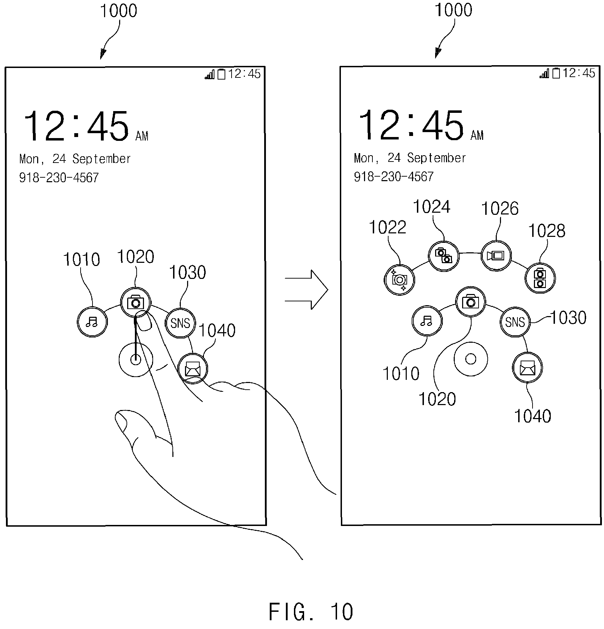

FIG. 10 is a diagram illustrating an operation of providing a short-cut UI based on an unlock pattern input from a user by an electronic device according to an embodiment of the present disclosure.

Referring to FIG. 10, a short-cut UI includes icons 1010, 1020, 1030, and 1040 respectively representing a plurality of applications. The icon 1010 represents a music appreciation application, the icon 1020 represents a photographing application, the icon 1030 represents a social network service (SNS) application, and the icon 1040 represents a text message application.

Referring to FIG. 10, the processor 430 of the electronic device 400 FIG. 4 may detect a touch-move input from the last checkpoint of the unlock pattern to the icon 1020 representing the photographing application. The processor 430 may control the display 410 to display a new short-cut UI, which includes a plurality of application icons 1022, 1024, 1026, and 1028 including a photographing function corresponding to the icon 1020 representing the photographing application, based on the touch-move input. The plurality of photographing application icons included in the new short-cut UI may include an icon for each of photographing applications installed in the memory 440 of FIG. 4.

If the touch-move input is not touch-released, but is touch-moved again to one of the plurality of application icons 1022, 1024, 1026, and 1028 included in the new short-cut UI, and is then touch-released on the one icon, the processor 430 may display an application screen for an application corresponding to the icon.

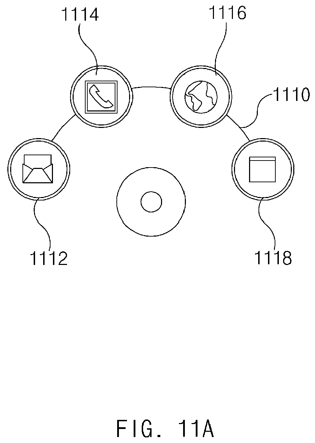

FIGs. 11A to 11D are diagrams illustrating short-cut UIs 1110, 1120, 1130, and 1140 provided by an electronic device 400 according to an embodiment of the present disclosure.

Referring to FIGs. 11A to 11D, each of the short-cut UIs 1110, 1120, 1130, and 1140 may include a plurality of icons representing corresponding applications.

Referring to FIG. 11A, the short-cut UI 1110 includes a text message application icon 1112, a phone application icon 1114, a web browsing application icon 1116, and a scheduling application icon 1118. Each of the application icons 1112, 1114, 1116, and 1118 may correspond to a respective application having a higher execution frequency.

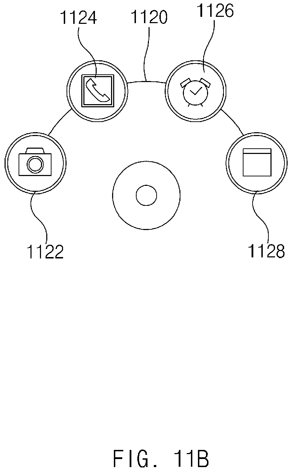

Referring to FIG. 11B, the short-cut UI 1120 includes a photographing application icon 1122, a phone application icon 1124, an alarm application icon 1126, and a scheduling application icon 1128. Each of the application icons 1122, 1124, 1126, and 1128 may correspond to a recently executed applications.

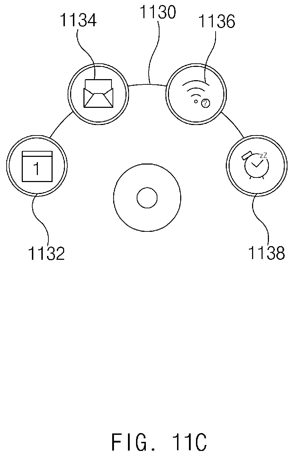

Referring to FIG. 11C, the short-cut UI 1130 includes a scheduling application icon 1132, a text message application 1134, a Wi-Fi setting application icon 1136, and an alarm application icon 1138. Each of the application icons 1132, 1134, 1136, and 1138 may correspond to a respective application that is executed when a new event occurs. Each of the application icons 1132, 1134, 1136, and 1138 may each correspond to an application displayed on a notification bar.

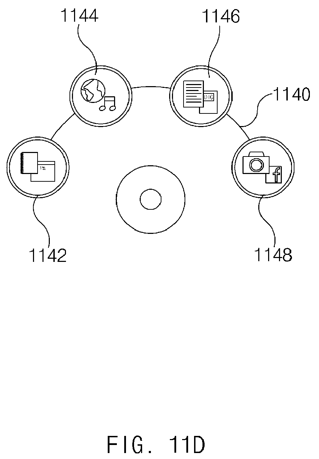

Referring to FIG. 11D, the short-cut UI 1140 includes an icon 1142 that includes a phone book application icon and a scheduling application icon, an icon 1144 that includes a web browsing application icon and a music appreciation application icon, an icon 1146 that includes a document editing application icon and a dictionary application icon, and an icon 1148 that includes a photographing application icon and an SNS application icon.

A plurality of application icons for a plurality of respective applications may be included in one object when the applications are frequently used together.

The short-cut UI 1140 may include two or more application icons as one icon. In this case, the two or more application icons represented as the one icon may be displayed as overlapping with each other. If the touch input is touch-moved on one of the plurality of icons included in the short-cut UI 1140 and is then touch-released on the icon, the processor 430 of the electronic device of FIG. 4 may control the display 410 to display at least two applications corresponding to the icon together.

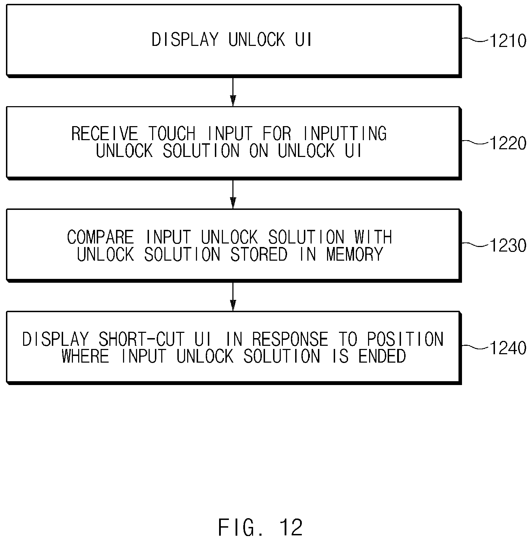

FIG. 12 is a flowchart illustrating a method for providing a short-cut UI in an electronic device based on an unlock pattern input from a user according to an embodiment of the present disclosure.

Referring to FIG. 12, in operation 1210, the electronic device 400 of FIG. 4 controls the display 410 to display an unlock UI on its screen.

In operation 1220, the electronic device 400 receives, from a user, a touch input, for inputting an unlock solution on the unlock UI displayed in operation 1210.

In operation 1230, the electronic device 400 compares the unlock resolution input in operation 1220 with an unlock solution stored in the memory 440 of FIG. 4.

In operation 1240, if the unlock solution input in operation 1220 is matched with an unlock solution stored in the memory 440 as a result of the comparison in operation 1230, the electronic device 400 may display a short-cut UI on the unlock UI in response to an end position of the unlock solution input in operation 1220.

An electronic device according to an embodiment of the present disclosure may include a display configured to display at least one content, a touch circuit configured to detect a touch input, a memory configured to store an unlock solution, and a processor electrically connected to the touch circuit, the display, and the memory.

The processor may display an unlock user interface (UI) through the display, may receive a touch input, for inputting an unlock solution on the unlock UI, through the touch circuit, and may display a short-cut UI, including a plurality of icons, on the unlock UI through the display in response to a position where the input unlock resolution is ended.

The displaying of the short-cut UI may be performed, if the input unlock solution is matched with the unlock solution stored in the memory as a result of a determination of the processor.

The short-cut UI may not displayed, if the input unlock solution is not matched with the unlock solution stored in the memory as a result of a determination of the processor.

If the touch input is touch-released on the last checkpoint of the plurality of checkpoints corresponding to the unlock solution, the processor may display a home screen through the display.

If the touch input is touch-moved on one of a plurality of icons included in the short-cut UI and is then touch-released on the one icon, the processor may display an application, corresponding to the icon, through the display.

The processor may receive a user input, for setting a plurality of icons to be included in the short-cut UI, from a user of the electronic device and may determine the plurality of icons to be included in the short-cut UI based on the user input.

The processor may inquiry about an application execution history stored in the memory and may determine a plurality of icons to be included in the short-cut UI based on the inquired application execution history.

The processor may determine the number of a plurality of icons to be included in the short-cut UI based on the inquired application execution history during a predetermined period of time.

The processor may determine at least one or more of applications, where an unconfirmed notification event occurs, as a plurality of icons to be included in the short-cut UI.

The at least one or more applications determined as the plurality of icons to be included in the short-cut UI may include at least one or more of a call application, a text message application, a chat application, or a social network service (SNS) application among the applications where the unconfirmed notification event occurs.

Each of the plurality of icons included in the short-cut UI may be an icon representing a type of an application.

If the touch input is touch-moved on one of the plurality of icons included in the short-cut UI, the processor may display a new short-cut UI including an application of a type corresponding to the icon.

If each of the plurality of icons included in the short-cut UI is displayed by overlapping at least two application icons and if the touch input is touch-moved on one of the plurality of icons included in the short-cut UI and is then touch-released on the one icon, the process may display at least two applications, corresponding to the icon, together.

If the short-cut UI is displayed, the processor may make a plurality of checkpoints, included in the unlock UI, disappeared through the display.

A method performed in an electronic device according to an embodiment of the present disclosure may include displaying an unlock user interface (UI), receiving a touch input for inputting an unlock solution on the unlock UI, and displaying a short-cut UI in response to a position where the input unlock resolution is ended.

The method may further include comparing the input unlock solution with an unlock solution stored in a memory of the electronic device. The displaying of the short-cut UI may be performed, if the input unlock solution is matched with the unlock solution stored in the memory.

The method may further include displaying a home screen, if the touch input is touch-released on the last checkpoint among the plurality of checkpoints corresponding to the unlock solution.

The method may further include displaying an application corresponding to an icon, if the touch input is touch-moved on the one of the plurality of icons included in the short-cut UI and is then touch-released on the one icon.

The method may further include making a plurality of checkpoints included in the unlock UI, if the short-cut UI is displayed.

According to an embodiment of the present disclosure, computer-readable storage media store instructions executed by at least one processor. The instructions are set to display an unlock user interface (UI), to receive a touch input for inputting an unlock solution on the unlock UI, and to display a short-cut UI in response to a position where the input unlock resolution is ended.

The term "module", as used herein, may indicate, for example, a unit including one of hardware, software, and firmware or two or more combinations thereof. The term "module" may be interchangeably used with, for example, "unit", "logic", "logical block", "component", "circuit", etc. A "module" may refer to a minimum unit of an integrated component or a part thereof. A "module" may be a minimum unit that performs one or more functions or a part thereof. A "module" may be mechanically or electronically implemented. For example, a "module" may include at least one of an application-specific integrated circuit (ASIC) chip, field-programmable gate arrays (FPGAs), or a programmable-logic device, which is well known or will be developed in the future, for performing certain operations.

According to an embodiment of the present disclosure, at least part of a device (e.g., modules or the functions) or a method (e.g., operations) may be implemented with, for example, instructions stored in computer-readable storage media which have a program module. When the instructions are executed by a processor, one or more processors may perform functions corresponding to the instructions. The computer-readable storage media may be, for example, the memory 130 of FIG. 1.

The computer-readable storage media may include a hard disc, a floppy disk, magnetic media (e.g., a magnetic tape), optical media (e.g., a compact disc read only memory (CD-ROM) and a digital versatile disc (DVD)), magneto-optical media (e.g., a floptical disk), a hardware device (e.g., a ROM, a random access memory (RAM), or a flash memory, and the like), etc. The program instructions may include, not only mechanical codes compiled by a compiler, but also high-level language codes that may be executed by a computer using an interpreter and the like. The above-mentioned hardware device may be configured to operate as one or more software modules to perform operations according to various embodiments of the present disclosure, and vice versa.

According to an embodiment of the present disclosure, the electronic device may allow the user to quickly execute a specific application by displaying, if an unlock solution is input, a short-cut UI on a position where input of an unlock solution is ended

Modules or program modules according to various embodiments of the present disclosure may include one or more of the above-mentioned components, some of which may be omitted, or other additional components may be further included. Operations and/or steps executed by modules, program modules, or other components may be executed by a successive method, a parallel method, a repeated method, or a heuristic method. Also, some operations may be executed in a different order or may be omitted, and other operations may be added.

While the present disclosure has been particularly shown and described with reference to certain embodiments thereof, it will be understood by those of ordinary skill in the art that various changes in form and details may be made therein without departing from the spirit and scope of the present disclosure as defined by the following claims and their equivalents.

## Claims

1. An electronic device (400), comprising:
a display (410) configured to display an unlock user interface(UI);
a touch circuit (420);
a memory (440) configured to store an unlock solution; and
a processor (430) electrically connected to the touch circuit (420), the display (410), and the memory (440),
wherein the memory(440) stores instructions that, when executed by the processor (430), cause the processor (430) to:
control the display (410) to display, in response to a touch input received from the touch circuit (420) for inputting an unlock solution on the unlock UI, a short-cut UI on the unlock UI according to a position where the input unlock solution is ended.

2. The electronic device (400) of claim 1, wherein the instructions further cause the processor (430) to control the display (410) to display the short-cut UI, if the processor (430) matches the input unlock solution with an unlock solution stored in the memory (440).

3. The electronic device (400) of claim 1, wherein the short-cut UI is not displayed, if the processor (430) determines that the input unlock solution does not match an unlock solution stored in the memory (440) as a result of a determination of the processor (430).

4. The electronic device (400) of claim 1, wherein the instructions further cause the processor (430) to display a home screen through the display (410) if the touch input is touch-released on a last checkpoint among a plurality of checkpoints corresponding to the unlock solution.

5. The electronic device (400) of claim 1, wherein the instructions further cause the processor(430) to control the display (410) to display an application corresponding to the icon if the touch input is touch-moved from the position where the input unlock solution is ended onto one of a plurality of icons included in the short-cut UI and is then touch-released on the icon.

6. The electronic device (400) of claim 1, wherein the instructions further cause the processor (430) to receive, from a user of the electronic device (400), a user input for setting a plurality of icons to be included in the short-cut UI and determines the plurality of icons to be included in the short-cut UI based on the user input.

7. The electronic device (400) of claim 1, wherein the instructions further cause the processor (430) to determine a plurality of icons to be included in the short-cut UI based on an application execution history of the plurality of applications stored in the memory (440).

8. The electronic device (400) of claim 7, wherein the instructions further cause the processor (430) to determine a number of the plurality of icons to be included in the short-cut UI based on the inquired application execution history during a specified period of time.

9. The electronic device (400) of claim 1, wherein, the instructions further cause the processor (430) to determine a respective icon corresponding to each of at least one application corresponding to the unconfirmed notification event, as an icon to be included in the short-cut UI, when an unconfirmed notification event has occurred,.

10. The electronic device (400) of claim 9, wherein the respective icon corresponding to each of at least one application corresponding to the unconfirmed notification event include:
at least one of a call application, a text message application, a chat application, and a social network service (SNS) application.

11. The electronic device (400) of claim 1, wherein each of a plurality of icons included in the short-cut UI is an icon representing a type of an application.

12. The electronic device (400) of claim 11, wherein the instructions further cause the processor (430) to display a new short-cut UI including an application of a type represented by the icon if the touch input is touch-moved from the position where the input unlock solution is ended onto one of the plurality of icons included in the short-cut UI.

13. The electronic device (400) of claim 1, wherein each of a plurality of icons included in the short-cut UI is displayed by overlapping at least two application icons, and wherein the instructions further cause the processor (430) to display at least two applications, corresponding to the icon, together if the touch input is touch-moved from the position where the input unlock solution is ended onto one of the plurality of icons included in the short-cut UI and is then touch-released on the icon.

14. The electronic device (400) of claim 1, wherein the instructions further cause the processor (430) to control the display (410) to end display of a plurality of checkpoints included in the unlock UI when the short-cut UI is displayed.

15. A method performed in an electronic device (400), the method comprising:
displaying an unlock user interface (UI);
receiving a touch input for inputting an unlock solution on the unlock UI; and
displaying, in response to the received touch input, a short-cut UI according to a position where the input unlock solution is ended.
